# EUROPEAN PATENT APPLICATION

(11) **EP 2 910 363 A1**
(43) Date of publication of application: **26.08.2015**
(21) Application number: 15156603.1
(22) Date of filing: 25.02.2015
(51) Int. Cl.: B29C 67/00, B33Y 10/00, B33Y 30/00, B33Y 40/00

(54) **THREE DIMENSIONAL MOLD OBJECT MANUFACTURING APPARATUS, METHOD FOR MANUFACTURING THREE DIMENSIONAL MOLD OBJECT, AND THREE DIMENSIONAL MOLD OBJECT**

(30) Priority: 25.02.2014 JP 2014033783
(71) Applicant: Seiko Epson Corporation, Shinjuku-ku Tokyo (JP)
(72) Inventor: Goto, Junichi, Suwa-shi, Nagano 392-8502 (JP)
(74) Representative: Miller Sturt Kenyon

(57) **Abstract**

A three dimensional mold object manufacturing apparatus (100) configured to manufacture a three dimensional mold object by layering layers which are formed using a three dimensional molding composition which includes a three dimensional molding powder, has a molding section (10) configured to mold the three dimensional mold object, a layer forming section (12) configured to form the layers formed by the three dimensional molding composition, on the molding section, and a discharging section (15) configured to discharge bonding liquid, which bonds the three dimensional molding composition, with regard to the layers, and the molding section (10) configured so as to move to a drawing region of the discharging section (15).

## Description

### CROSS-REFERENCE TO RELATED APPLICATIONS

This application claims priority to Japanese Patent Application No. 2014-033783 filed on February 25, 2014. The entire disclosure of Japanese Patent Application No. 2014-033783 is hereby incorporated herein by reference.

### BACKGROUND

### Technical Field

The present invention relates to a three dimensional mold object manufacturing apparatus, a method for manufacturing a three dimensional mold object, and a three dimensional mold object.

### Related Art

There are known three dimensional mold object manufacturing apparatuses which mold a three dimensional object while powder is solidified using a bonding liquid (for example, refer to Japanese Unexamined Patent Application Publication No. 2001-150556). A three dimensional object is mold by the following operations being repeated in a molding apparatus. First, a powder layer is formed by powder being thinly laid using a blade and the powder being bonded together due to a bonding liquid being discharged on a desired portion of the powder layer. As a result, a member with a thin plate shape (refer to below as a "unit layer") is formed due to only the portion, where the bonding liquid is discharged, being bonded in the powder layer. After this, a further powder layer is thinly formed on this powder layer and the bonding liquid is discharged to a desired portion. As a result, a new unit layer is formed also at a portion, where bonding liquid which is discharged, in the powder layer which is newly formed. At this time, since the bonding liquid which is discharged onto the powder layer sinks in and reaches the unit layer which is previously formed, the unit layer which is newly formed is also bonded to the unit layer which is previously formed. It is possible to mold a three dimensional object by the unit layers with a thin plate shape being layered one layer at a time by repeating these operations.

This three dimensional molding technique (three dimensional mold object manufacturing apparatus) is able to directly mold by bonding the powder with only three dimensional data for the object which is to be molded and it is possible to quickly and cheaply mold the three dimensional objects since it is not necessary to form a metal mold prior to molding. In addition, it is possible to integrally form the mold object without the mold object being divided into a plurality of components even for, for example, complex objects which have an internal configuration since the unit layers with a thin plate shape are molded by being layered one layer at a time.

The three dimensional mold object manufacturing apparatus as described above is configured so that the bonding liquid is typically supplied to a discharging section via a supply pipe.

However, there is a problem in that it is necessary for the supply pipe to be relatively long and space for routing the supply pipe is necessary since the three dimensional mold object manufacturing apparatuses in the prior art is configured so that the bonding liquid is discharged with regard to the powder layer by moving the discharging section which discharges the bonding liquid. In addition, due to the supply pipe being long, there is also a problem in that there are faults in discharging the bonding liquid due to bending of the pipe, clogging, and the like. In addition, since the discharging section is moved, there are also problems such as the flight of the liquid droplet being curved.

### SUMMARY

The object of the present invention is to provide a three dimensional mold object manufacturing apparatus with high bonding liquid discharge precision where it is possible to easily supply bonding liquid to a discharging section and to provide a method for manufacturing a three dimensional mold object, where it is possible to efficiently manufacture a three dimensional mold object with high dimensional precision, and a three dimensional mold object which is manufactured with high dimensional precision.

This object is achieved using the present invention described below.

A three dimensional mold object manufacturing apparatus according to one aspect of the invention, which is configured to manufacture a three dimensional mold object by layering layers which are formed using a three dimensional molding composition which includes a three dimensional molding powder, has a molding section configured to mold the three dimensional mold object, a layer forming section configured to form the layers formed by the three dimensional molding composition, on the molding section, and a discharging section configured to discharge bonding liquid, which bonds the three dimensional molding composition, with regard to the layers, and the molding section is configured so as to move to a drawing region of the discharging section.

Due to this, it is possible to provide a three dimensional mold object manufacturing apparatus with high bonding liquid discharge precision where it is possible to easily supply the bonding liquid to the discharging section.

In the three dimensional mold object manufacturing apparatus of the aspect of the invention, it is preferable that the layer forming section be configured such that a movement direction of the layer forming section and a movement direction of the molding section intersect.

Due to this, it is possible to efficiently perform forming of the layers and discharging of the bonding liquid and it is possible to improve the productivity of the three dimensional mold object.

In the three dimensional mold object manufacturing apparatus of the aspect of the invention, it is preferable that the three dimensional mold object manufacturing apparatus further comprise a recovering section configured to recover the three dimensional molding composition which is surplus when forming the layers.

Due to this, it is possible to more efficiently manufacture the three dimensional mold object.

In the three dimensional mold object manufacturing apparatus of the aspect of the invention, it is preferable that the recovering section be provided to be independent to the molding section.

Due to this, it is possible to more efficiently manufacture the three dimensional mold object.

In the three dimensional mold object manufacturing apparatus of the aspect of the invention, it is preferable that the layer forming section be one type which is selected from a group which consists of a squeegee and a roller.

Due to this, it is possible to form the layers with more uniform thickness and it is possible for dimensional precision of the three dimensional mold object which is manufactured to be further increased.

A method for manufacturing a three dimensional mold object of the aspect of the invention, where a three dimensional mold object is manufactured using the three dimensional mold object manufacturing apparatus of the present embodiment, includes forming the layers using the layer forming section on the molding section and discharging the bonding liquid with regard to the layers.

Due to this, it is possible to manufacture the three dimensional mold object with high dimensional precision.

A three dimensional mold object of the aspect of the invention is manufactured using the three dimensional mold object manufacturing apparatus of the invention.

Due to this, it is possible to provide the three dimensional mold object which is manufactured with high dimensional precision.

A three dimensional mold object of the aspect of the invention is manufactured using the method for manufacturing the three dimensional mold object of the aspect of the invention.

Due to this, it is possible to provide the three dimensional mold object which is manufactured with high dimensional precision.

### BRIEF DESCRIPTION OF THE DRAWINGS

Embodiments of the present invention will now be described by way of further example only and with reference to the accompanying drawings, in which:
Fig. 1 is a planar diagram which is a planar view of a first embodiment which is a three dimensional mold object manufacturing apparatus of the present invention viewed from above;
Fig. 2 is a cross sectional diagram when the three dimensional mold object manufacturing apparatus shown in Fig. 1 is viewed to a direction to the right in the diagram;
Fig. 3 is a planar diagram which is a planar view of a second embodiment which is a three dimensional mold object manufacturing apparatus of the present invention viewed from above; and
Fig. 4 is a planar diagram illustrating another example of a three dimensional mold object manufacturing apparatus of the present invention.

### DETAILED DESCRIPTION OF EXEMPLARY EMBODIMENTS

Appropriate embodiments of the present invention will be described in detail below with reference to the attached diagrams.

### First Embodiment of Three Dimensional Mold Object Manufacturing Apparatus

A first embodiment of a three dimensional mold object manufacturing apparatus of the present invention will be described first.

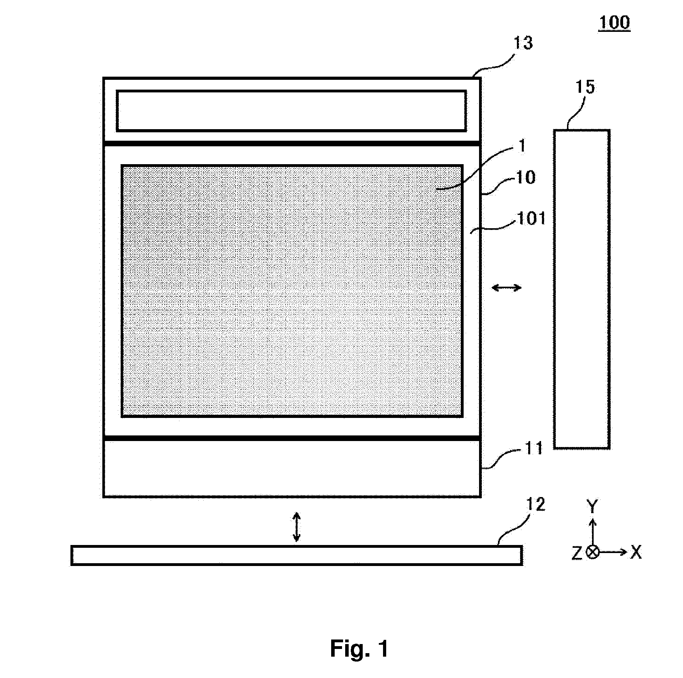

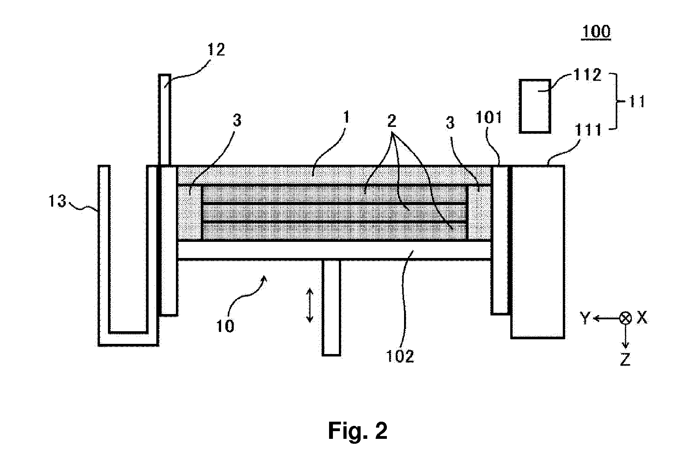

Fig. 1 is a planar diagram which is a planar view of a first embodiment which is a three dimensional mold object manufacturing apparatus of the present invention viewed from above, and Fig. 2 is a cross sectional diagram when the three dimensional mold object manufacturing apparatus shown in Fig. 1 is viewed to a direction to the right in the diagram.

A three dimensional mold object manufacturing apparatus 100 is an apparatus which manufactures three dimensional mold objects by layering unit layers 2 which are formed using a three dimensional molding composition which includes a three dimensional molding powder.

As shown in Fig. 1 and Fig. 2, the three dimensional mold object manufacturing apparatus 100 has a molding section 10 which molds the three dimensional mold objects, a supplying section 11 which supplies the three dimensional molding composition, a squeegee (a layer forming section) 12 which forms layers 1 with the three dimensional molding composition on the molding section 10 using the three dimensional molding composition which is supplied, a recovering section 13 which recovers the three dimensional molding composition which is surplus when forming the layers 1, and a discharging section 15 which discharges a bonding liquid including a bonding agent with regard to the layers 1. Here, the three dimensional molding composition and the bonding liquid will be described later.

As shown in Fig. 1 and Fig. 2, the molding section 10 has a frame body 101 and a molding stage 102 which is provided inside the frame body 101.

The frame body 101 is configured by a member with a frame shape.

The molding stage 102 has a rectangular shape over the XY plane.

The molding stage 102 is configured so as to be driven in the Z axis direction using a driving section which is not shown in the diagram.

The layers 1 are formed on a region which is formed by the inner wall surface of the frame body 101 and the molding stage 102.

In addition, the molding section 10 is able to be driven in the X axis direction using a driving section which is not shown in the diagram.

Then, the bonding liquid is discharged onto the layers 1 using the discharging section 15 by the molding section 10 being moved in the X axis direction, that is, to a drawing region of the discharging section 15 which will be described later.

The supplying section 11 has a function of supplying the three dimensional molding composition in the three dimensional mold object manufacturing apparatus 100.

The supplying section 11 has a supplying region 111, which is where the three dimensional molding composition is supplied to, and a supplying section 112 which supplies the three dimensional molding composition onto the supplying region 111.

The supplying region 111 has a rectangular shape which is long in the X axis direction and is provided so as to come into contact with one side of the frame body 101. In addition, the supplying region 111 is provided so as to be the same surface as the upper surface of the frame body 101.

The three dimensional molding composition which is supplied to the supplying region 111 is transported to the molding stage 102 using the squeegee 12 which will be described later and forms the layers 1.

The squeegee 12 (the layer forming section) has a plate shape which is long in the X axis direction. In addition, the squeegee 12 is configured so as to be driven in the Y axis direction using a driving section which is not shown in the diagrams. In addition, the squeegee 12 is configured so that the tip end in the latitudinal direction comes into contact with the upper surface of the frame body 101 and the supplying region 111.

The squeegee 12 transports the three dimensional molding composition which is supplied to the supplying region 111 to the molding stage 102 while being moved in the Y axis direction and forms the layers 1 on the molding stage 102.

In the present embodiment, the squeegee 12 is configured so that the movement direction of the squeegee 12 and the movement direction of the molding section 10 intersect (are orthogonal). Due to the squeegee 12 being configured in this manner, it is possible to perform preparation for forming the layer 1 which is next when performing discharging of the bonding liquid using the discharging section 15 and it is possible to improve the productivity of the three dimensional mold object.

The recovering section 13 is a member with a box shape where the upper surface is open and is provided independently to the molding section 10. The recovering section 13 has a function of recovering the three dimensional molding composition which is surplus in forming the layers 1.

The recovering section 13 is provided so as to come into contact with the frame body 101 and so as to oppose the supplying section 11 via the frame body 101.

The surplus three dimensional molding composition, which is carried by the squeegee 12, is recovered using the recovering section 13 and the three dimensional molding composition which is recovered is used again.

The discharging section 15 has a function of discharging the bonding liquid with regard to the layers 1 which are formed.

In detail, the molding section 10 which forms the layers 1 on the molding stage 102 is moved in the X axis direction and the bonding liquid is discharged from the discharging section 15 with regard to the layers 1 when approaching the drawing region which is a lower section of the discharging section 15.

A liquid droplet discharge head, which discharges liquid droplets of the bonding liquid with an ink jet system, is mounted in the discharging section 15. In addition, the discharging section 15 is provided with a bonding liquid supplying section which is not shown in the diagrams. The liquid droplet discharge head with a so-called piezo driving system is adopted in the present embodiment.

In addition, a curing section (which is not shown in the diagrams) which cures the bonding liquid is provided in the three dimensional mold object manufacturing apparatus 100 in the vicinity of the discharging section 15. For example, in a case where a plurality of the discharging sections 15 are provided to be divided up into Y, M, C, K, W, and clear ink, it is possible to manufacture the three dimensional mold object with high dimensional precision due to the curing section (which is not shown in the diagrams) which cures the bonding liquid being provided between each of the colors. Alternatively, the curing section may be provided on both ends of the discharging sections 15. It is possible to promote sufficient curing by curing when returning to the region for forming the layers 1 after liquid droplets of the bonding liquid are discharged and to manufacture the three dimensional mold object with high dimensional precision.

In the three dimensional mold object manufacturing apparatus 100 as described above, it is possible to suppress movement of the discharging section 15 due to the molding section 10 being configured so as to move to the drawing region of the discharging section 15. As a result, it is possible for a supply pipe, which supplies the bonding liquid from the bonding liquid supplying section to the discharging section 15, to be relatively short and it is possible to stably supply the bonding liquid to the discharging section 15. In addition, it is possible to suppress bending of the supply pipe, clogging, and the like being generated. In addition, since it is possible to suppress movement of the discharging section 15, it is possible to prevent the flight of the liquid droplet being curved.

Here, a case where the squeegee 12 is used as the layer forming section is described in the description above but the layer forming section is not limited to the squeegee and may be, for example, a roller.

In addition, a removing section, which removes the three dimensional molding composition which is attached to the squeegee 12, may be provided in the recovering section 13. As the removing section, it is possible to use ultrasonic waves, wiping, static electricity, or the like.

### 2. Method for Manufacturing Three Dimensional Mold Object

A method for manufacturing a three dimensional mold object of the present embodiment is a method for manufacturing where the three dimensional mold object manufacturing apparatus 100 as described above is used.

In detail, the three dimensional mold object is manufactured as follows.

First, the three dimensional molding composition is supplied to the supplying region 111 using the supplying section 112 (supplying process).

Next, the three dimensional molding composition which is supplied to the supplying region 111 is carried to the molding stage 102 using the squeegee 12 and the layer 1 is formed (layer forming process).

The thickness of the layer 1 is not particularly limited but is preferably 30 µm or more and 500 µm or less and more preferably 70 µm or more and 150 µm or less. Due to this, it is possible for the three dimensional mold object to have sufficiently superior productivity, for unintentional irregularities and the like to be more effectively prevented from being generated in the three dimensional mold object which is manufactured, and for the three dimensional mold object to have particularly superior dimensional precision.

The three dimensional molding composition which is surplus after forming the layer 1 is recovered by the recovering section 13 (recovering process).

The molding section 10 which forms the layer 1 is moved in the X axis direction and the bonding liquid is discharged at the drawing region of the discharging section 15 with regard to the layer 1 (discharging process). After this, the bonding liquid is cured using a curing section which is not shown in the diagram, and a unit layer 2 and a uncured section 3 are formed (curing process).

After this, the molding stage 102 is lowered in the Z axis direction by the thickness of the layer 1 which is formed and each of the processes are repeated in order. Due to this, the three dimensional mold object is formed.

The dimensional precision of the three dimensional mold object which is manufactured as described above is particularly high.

### 3. Second Embodiment of Three Dimensional Mold Object Manufacturing Apparatus

A second embodiment which is a three dimensional mold object manufacturing apparatus of the present invention will be described next.

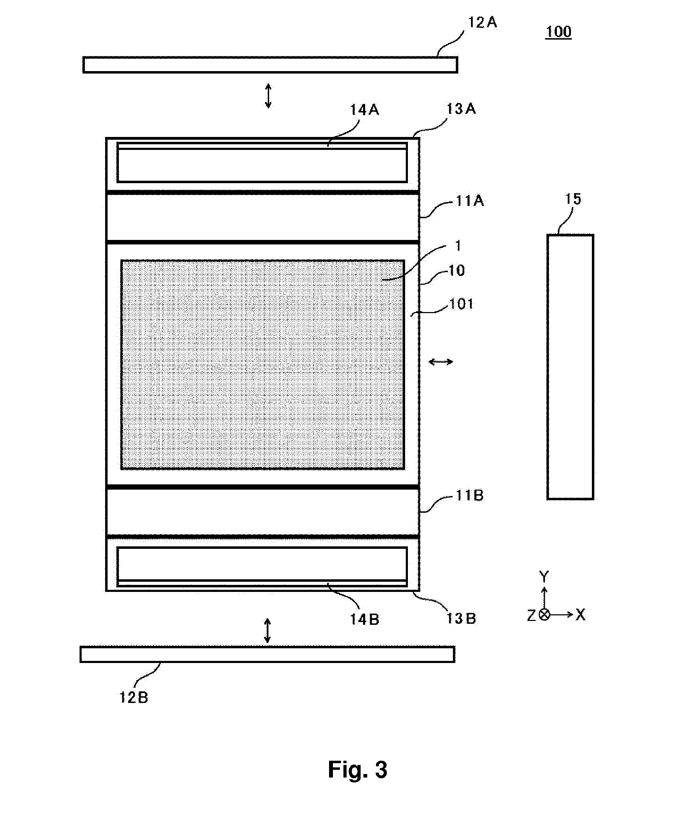

Fig. 3 is a planar diagram which is a planar view of the second embodiment which is the three dimensional mold object manufacturing apparatus of the present invention viewed from above.

The second embodiment will be described below, but the points of different with the embodiment described above will be central in the description and description of the same items will be omitted. Here, the same reference numerals are given to configurations which are the same as the embodiment described above.

As shown in Fig. 3, the three dimensional mold object manufacturing apparatus 100 according to the present embodiment has the molding section 10, a supplying section 11A and a supplying section 11B on both sides of the molding section 10 in the Y axis direction, and a recovering section 13A and a recovering section 13B which respectively come into contact with the supplying section 11A and the supplying section 11B.

In addition, the three dimensional mold object manufacturing apparatus 100 according to the present embodiment has two of the layer forming sections, a squeegee 12A and a squeegee 12B, which move in the Y axis direction.

In addition, the discharging section 15 is provided on the X axis direction side of the molding section 10.

In addition, a removing section 14A and a removing section 14B which remove the three dimensional molding composition which is attached to the squeegee 12A and the squeegee 12B are provided in the recovering section 13A and the recovering section 13B.

In the three dimensional mold object manufacturing apparatus 100 with this configuration, after, for example, the layer 1 is formed on the molding section 10 with the three dimensional molding composition which is supplied to the supplying section 11A using the squeegee 12A, the molding section 10 is moved to a drawing region of the discharging section 15, the bonding liquid is discharged onto the layer 1, and the bonding liquid is cured.

The three dimensional molding composition which is attached is removed from the first squeegee 12A using the removing section 14B which is provided in the recovering section 13B while the molding section 10 is moving and returning to a drawing region of the discharging section 15. When the three dimensional molding composition which is attached is removed, the first squeegee 12A returns to a designated position before the layer 1 is formed. Next, the three dimensional molding composition is supplied by the supplying section 11B and preparation for forming the layer 1 which is new using the second squeegee 12B is performed. After removing of the three dimensional molding composition which is attached to the first squeegee 12A is completed, preparation for forming the layer 1 using the first squeegee 12A with the three dimensional molding composition which is supplied by the supplying section 11B may be performed without the first squeegee 12A returning to the designated position before forming the layer 1.

Alternatively, the first squeegee 12A may be moved to the recovering section 13A after forming the layer 1 and the three dimensional molding composition which is attached may be removed using the removing section 14A which is provided in the recovering section 13A.

In this manner, according to the three dimensional mold object manufacturing apparatus 100 of the present embodiment, it is possible to form the layer 1 in both directions and productivity of the three dimensional mold object is improved.

### 4. Three Dimensional Molding Composition

The three dimensional molding composition will be described next in detail.

The three dimensional molding composition includes a three dimensional molding powder and a water soluble resin.

Each of the components will be described in detail below.

### Three Dimensional Molding Powder

The three dimensional molding powder is configured by a plurality of individual particles.

As the particles, it is possible to use various particles but it is preferable that porous particles be used. Due to this, it is possible for the bonding agent in the bonding liquid to appropriately penetrate inside the porous holes when manufacturing the three dimensional mold object and it is possible to appropriately use the particles in manufacturing of the three dimensional mold object with superior mechanical strength.

As the configuring material of the porous particles which configure the three dimensional mold powder, there are the examples of, for example, organic particles, organic particles, a composite of these, or the like.

As the inorganic materials which configure the porous particles, there are the examples of, for example, various types of metals, metal compounds, and the like. As the metal compounds, there are the examples of, for example, various types of metal oxides such as silica, alumina, titanium oxide, zinc oxide, zirconium oxide, tin oxide, magnesium oxide, and potassium titanate, various types of metal hydroxides such as magnesium hydroxide, aluminum hydroxide, and calcium hydroxide, various types of metal nitride such as silicon nitride, titanium nitride, and aluminum nitride, various types of metal carbides such as silicon carbide and titanium carbide, various types of metal sulfides such as zinc sulfide, various types of metal carbonates such as calcium carbonate and magnesium carbonate, various types of metal sulfates such as calcium sulfate and magnesium sulfate, various types of metal silicates such as calcium silicate and magnesium silicate, various types of metal phosphates such as calcium phosphate, various types of metal borates such as aluminum borate and magnesium borate, a composite of these, or the like.

As the organic materials which configure the porous particles, there are the examples of, for example, synthetic resins, natural polymers, and the like, and in more detail, there are the examples of polyethylene resin, polypropylene, polyethylene oxide, polypropylene oxide, polyethylene imine, polystyrene, polyurethane, polyuria, polyester, silicone resin, acrylic silicone resin, polymers with a (meth)acrylate ester such as polymethyl methacrylate as a configuring monomer, crosspolymers with a (meth)acrylate ester such as a methyl methacrylate cross polymer as a configuring monomer (ethylene acrylate copolymer resin), polyamide resins such as nylon 12, nylon 6, or nylon copolymers, polyimide, carboxymethyl cellulose, gelatin, starch, chitin, chitosan, and the like.

Among these, the porous particles are preferably configured using inorganic materials, are more preferably configured using a metal oxide, and are even more preferably configured using silica. Due to this, it is possible for the three dimensional mold object to have particularly superior characteristics such as mechanical strength and durability. In addition, in particular, the effects described above are more remarkably exhibited if the porous particles are configured using silica. In addition, since silica has superior fluidity, it is effective in forming the layers 1 with even higher uniformity in thickness and it is possible for the three dimension mold object to have particularly superior productivity and dimensional precision.

As the silica, it is possible to appropriate use commercially available products. In detail, there are the examples of, for example, MIZUKASIL P-526, MIZUKASIL P-801, MIZUKASIL NP-8, MIZUKASIL P-802, MIZUKASIL P-802Y, MIZUKASIL C-212, MIZUKASIL P-73, MIZUKASIL P-78A, MIZUKASIL P-78F, MIZUKASIL P-87, MIZUKASIL P-705, MIZUKASIL P-707, MIZUKASIL P-707D, MIZUKASIL P-709, MIZUKASIL C402, MIZUKASIL C-484 (all manufactured by Mizusawa Industrial Chemicals, Ltd.), TOKUSIL U, TOKUSIL UR, TOKUSIL GU, TOKUSIL AL-1, TOKUSIL GU-N, TOKUSIL N, TOKUSIL NR, TOKUSIL PR, SOLEX, FINE SEAL E-50, FINE SEAL T-32, FINE SEAL X-30, FINE SEAL X-37, FINE SEAL X-37B, FINE SEAL X-45, FINE SEAL X-60, FINE SEAL X-70, FINE SEAL RX-70, FINE SEAL A, FINE SEAL B (all manufactured by Tokuyama Corp.), SIPERNAT, CARPLEX FPS-101, CARPLEX CS-7, CARPLEX 22S, CARPLEX 80, CARPLEX 80D, CARPLEX XR, CARPLEX 67 (all manufactured by DSL Japan Co. Ltd.), SYLOID 63, SYLOID 65, SYLOID 66, SYLOID 77, SYLOID 74, SYLOID 79, SYLOID 404, SYLOID 620, SYLOID 800, SYLOID 150, SYLOID 244, SYLOID 266 (all manufactured by Fuji Silysia Chemical Ltd.), NIPGEL AY-200, NIPGEL AY-6A2, NIPGEL AZ-200, NIPGEL AZ-6A0, NIPGEL BY-200, NIPGEL CX-200, NIPGEL CY-200, NIPSIL E-150J, NIPSIL E-220A, NIPSIL E-200A (all manufactured by Tosoh Silica Corp.), and the like.

In addition, it is preferable that hydrophobic processing be carried out on the porous particles. Here, there is a tendency for the bonding agent which is included in the bonding liquid to typically be hydrophobic. Accordingly, it is possible for the bonding agent to more appropriately penetrate into the porous holes of the porous particles due to hydrophobic processing being carried out on the porous particles. As a result, it is possible for an anchor effect to be more remarkably exhibited and for the three dimensional mold object which is obtained to have even more superior mechanical strength. In addition, it is possible to reuse the porous particles where hydrophobic processing is carried out. Describing in more detail, when hydrophobic processing is carried out on the porous particles, water soluble resin which will be described later entering the porous holes is prevented since the affinity of the water soluble resin and the porous particles is reduced. As a result, it is possible for impurities to be more easily removed from the porous particles in a region where the bonding liquid is not applied by washing with water or the like and it is possible for these porous particles to be recovered with high purity in manufacturing of the three dimensional mold object. For this reason, it is possible to obtain the three dimensional molding powder which is reliably controlled to be a desired composition by the three dimensional molding powder which is recovered being mixed again with a water soluble resin or the like in designated proportions.

It is sufficient if the hydrophobic processing, which is carried out on the porous particles which configure the three dimensional molding powder, is any process which increases the hydrophobicity of the porous particles, but a process which introduces a hydrocarbon group is preferable. Due to this, it is possible for the hydrophobicity of the porous particles to be higher. In addition, it is possible for the uniformity of the extent of the hydrophobic processing to be higher for each of the particles and each portion on the surface of the particles (including the surfaces inside of the porous holes) in an easy and reliable manner.

A silane compound which includes a silyl group is preferable as the compound which is used in the hydrophobic processing. As specific examples of the compound which is able to be used in the hydrophobic processing, there are the examples of, for example, hexamethyl disilazane, dimethyl dimethoxy silane, diethyl diethoxy silane, 1-propenyl methyl dichloro silane, propyl dimethyl chloro silane, propyl methyl dichloro silane, propyl trichloro silane, propyl triethoxy silane, propyl trimethoxy silane, styrylethyl trimethoxy silane, tetradecyl trichloro silane, 3-thiocyanate propyl triethoxy silane, p-tolyl dimethyl chloro silane, p-tolyl methyl dichloro silane, p-tolyl trichloro silane, p-tolyl trimethoxy silane, p-tolyl triethoxy silane, di-n-propyl di-n-propoxy silane, diisopropyl diisopropoxy silane, di-n-butyl di-n-propoyl silane, di-sec-butyl di-sec-butyloxy silane, di-t-butyl di-t-butyloxy silane, octadecyl trichloro silane, octadecyl methyl diethoxy silane, octadecyl triethoxy silane, octadecyl trimethoxy silane, octadecyl dimethyl chloro silane, octadecyl methyl dichloro silane, octadecyl methoxy dichloro silane, 7-octenyl dimethyl chloro silane, 7-octenyl trichloro silane, 7-octenyl trimethoxy silane, octylmethyl dichloro silane, octyldimethyl chloro silane, octyl trichloro silane, 10-undecenyl dimethyl chloro silane, undecyl trichloro silane, vinyldimethyl chloro silane, methyl octadecyl dimethoxy silane, methyl dodecyl diethoxy silane, methyl octadecyl silane, methyl octadecyl diethoxy silane, n-octyl methyl dimethoxy silane, n-octyl methyl diethoxy silane, triacontyl dimethyl chloro silane, triacontyl trichloro silane, methyl trimethoxy silane, methyl triethoxy silane, methyl tri-n-propoxy silane, methyl isopropoxy silane, methyl-n-butyloxy silane, methyl tri-sec-butyloxy silane, methyl tri-t-butyloxy silane, ethyl trimethoxy silane, ethyl triethoxy silane, ethyl tri-n-propoxy silane, ethyl isopropoxy silane, ethyl-n-butyloxy silane, ethyl tri-sec-butyloxy silane, ethyl tri-t-butyloxy silane, n- propyl trimethoxy silane, isobutyl trimethoxy silane, n-hexyl trimethoxy silane, hexadecyl trimethoxy silane, n-octyl trimethoxy silane, n-dodecyl trimethoxy silane, n-octadecyl trimethoxy silane, n-propyl triethoxy silane, isobutyl triethoxy silane, n-hexyl triethoxy silane, hexadecyl triethoxy silane, n-octyl triethoxy silane, n-dodecyl trimethoxy silane, n-octadecyl triethoxy silane, 2-[2-(trichlorosilyl)ethyl] pyridine, 4-[2-(trichlorosilyl)ethyl] pyridine, diphenyl dimethoxy silane, diphenyl diethoxy silane, 1,3(trichlorosilyl methyl) heptacosane, dibenzyl dimethoxy silane, dibenzyl diethoxy silane, phenyl trimethoxy silane, phenyl methyl dimethoxy silane, phenyl dimethyl methoxy silane, phenyl dimethoxy silane, phenyl diethoxy silane, phenyl methyl diethoxy silane, phenyl dimethyl ethoxy silane, benzyl triethoxy silane, benzyl trimethoxy silane, benzyl methyl dimethoxy silane, benzyl dimethyl methoxy silane, benzyl dimethoxy silane, benzyl diethoxy silane, benzyl methyl diethoxy silane, benzyl dimethyl ethoxy silane, benzyl triethoxy silane, dibenzyl dimethoxy silane, dibenzyl ethoxy silane, 3-acetoxy propyl trimethoxy silane, 3-acryloxypropyl trimethoxy silane, allyl trimethoxy silane, allyl triethoxy silane, 4-aminobutyl triethoxy silane, (aminoethyl aminomethyl) phenethyl trimethoxy silane, N-(2-aminoethyl)-3-aminopropyl methyl dimethoxy silane, N-(2-aminoethyl)-3-aminopropyl trimethoxy silane, 6-(aminohexyl aminopropyl) trimethoxy silane, p-aminophenyl trimethoxy silane, p-aminophenyl ethoxy silane, m-aminophenyl trimethoxy silane, m-aminophenyl methoxy silane, 3-aminopropyl trimethoxy silane, 3-aminopropyl triethoxy silane, ω-amino undecyl trimethoxy silane, amyl triethoxy silane, benzoxa silepin dimethyl ester, 5-(bicycle heptenyl) triethoxy silane, bis(2-hydroxyethyl)-3-aminopropyl triethoxy silane, 8-bromooctyl trimethoxy silane, bromophenyl trimethoxy silane, 3-bromopropyl trimethoxy silane, n-butyl trimethoxy silane, 2-chloromethyl triethoxy silane, chloromethyl methyl diethoxy silane, chloromethyl methyl diisopropoxy silane, p-(chloromethyl) phenyl trimethoxy silane, chloromethyl triethoxy silane, chlorophenyl triethoxy silane, 3-chloropropyl methyl dimethoxy silane, 3-chloropropyl triethoxy silane, 3-chloropropyl trimethoxy silane, 2-(4-chlorosulfonyl phenyl) ethyl trimethoxy silane, 2-cyanoethyl triethoxy silane, 2-cyanoethyl trimethoxy silane, cyanomethyl phenethyl trimethoxy silane, 3-cyanopropyl triethoxy silane, 2-(3-cyclohexenyl)ethyl trimethoxy silane, 2-(3-cyclohexenyl)ethyl triethoxy silane, 3-cyclohexenyl trichloro silane, 2-(3-cyclohexenyl)ethyl trichloro silane, 2-(3-cyclohexenyl)ethyl chloro dimethyl silane, 2-(3-cyclohexenyl)ethyl methyl dichloro silane, cyclohexyl dimethyl chloro silane, cyclohexylethyl dimethoxy silane, cyclohexyl methyl dichloro silane, cyclohexyl methyl dimethoxy silane, (cyclohexyl methyl) trichloro silane, cyclohexyl trichloro silane, cyclohexyl trimethoxy silane, cyclooctyl trichloro silane, (4-cyclooctenyl) trichloro silane, cyclopentyl trichloro silane, cyclopentyl trimethoxy silane, 1,1-diethoxy-1-silacyclo pentadiene-3-ene, 3-(2,4-dinitro phenyl)propyl triethoxy silane, (dimethyl chlorosilyl) methyl-7,7-dimethyl norpinane, (cyclohexyl aminomethyl) methyl diethoxy silane, (3-cyclopenta dienylpropyl) triethoxy silane, N,N-diethyl-3-aminopropyl trimethoxy silane, 2-(3,4-epoxy cyclohexyl) ethyl trimethoxy silane, 2-(3,4-epoxy cyclohexyl) ethyl triethoxy silane, (furfuryloxy methyl) triethoxy silane, 2-hydroxy-4-(3-triethoxy propoxy) diphenyl ketone, 3-(p-methoxy phenyl) propyl methyl dichloro silane, 3-(p-methoxy phenyl) propyl trichloro silane, p-(methyl phenethyl) methyl dichloro silane, p-(methyl phenethyl) trichloro silane, p-(methyl phenethyl) dimethyl chloro silane, 3 morpholinopropyl trimethoxy silane, (3-glycidoxy propyl) methyl diethoxy silane, 3-glycidoxy propyl trimethoxy silane, 1,2,3,4,7,7-hexachloro-6-methyl diethoxy silyl-2-norbornene, 1,2,3,4,7,7-hexachloro-6-triethoxy silyl-2-norbornene, 3-iodopropyl trimethoxy silane, 3-isocyanato propyl triethoxy silane, (mercapto methyl) methyl diethoxy silane, 3-mercapto propyl methyl dimethoxy silane, 3-mercaptopropyl dimethoxy silane, 3-mercaptopropyl triethoxy silane, 3-methacryloxypropyl methyldiethoxy silane, 3-methacryloxypropyl trimethoxy silane, methyl{2-(3-trimethoxysilyl propylamino) ethylamino}-3-propionate, 7-octenyloxy trimethoxy silane, R-N-α-phenethyl-N'- triethoxysilyl propyl urea, S-N-α- phenethyl -N'- triethoxysilyl propyl urea, phenethyl trimethoxy silane, phenethyl methyl dimethoxy silane, phenethyl dimethyl silane, phenethyl dimethoxy silane, phenethyl diethoxy silane, phenethyl methyldiethoxy silane, phenethyl dimethylethoxy silane, phenethyl trimethoxy silane, (3-phenylpropyl) dimethyl chloro silane, (3-phenylpropyl) methyl dichloro silane, N-phenyl aminopropyl trimethoxy silane, N-(triethoxysilyl propyl) dansylamide, N-(3-triethoxysilyl propyl)-4,5-dihydroimidazole, 2-(triethoxysilyl ethyl)-5-(chloroacetoxy) bicycloheptane, (S)-N-triethoxysilyl propyl-O-mentho carbamate, 3-(triethoxysilyl propyl)-p-nitrobenzamide, 3-(triethoxysilyl) propyl succinic anhydride, N-[5-(trimethoxy silyl)-2-aza-1-oxo-pentyl] caprolactam, 2-(trimethoxy silylethyl) pyridine, N-(trimethoxy silyl) benzyl-N,N,N-trimethyl ammonium chloride, phenyl vinyl diethoxy silane, 3-thiocyanate propyl triethoxy silane, (tridecafluoro 1,1,2,2- tetra-hydro-octyl) triethoxy silane, N-{3-(triethoxy silyl) propyl} phthalamide acid, (3,3,3-trifluoropropyl) methyl dimethoxy silane, (3,3,3-trifluoropropyl) trimethoxy silane, 1-trimethoxy silyl-2-(chloromethyl) phenyl ethane, 2-(trimethoxy silyl) ethyl phenyl sulfonyl azide, β-trimethoxy silyl ethyl-2-pyridine, trimethoxy silyl propyl diethylene triamine, N-(3-trimethoxy silyl propyl) pyrrole, N-trimethoxy silylpropyl-N,N,N-tributyl ammonium bromide, N-trimethoxy silylpropyl-N,N,N-tributyl ammonium chloride, N-trimethoxy silylpropyl-N,N,N-trimethyl ammonium chloride, vinylmethyl diethoxy silane, vinyl triethoxy silane, vinyl trimethoxy silane, vinylmethyl dimethoxy silane, vinyl dimethyl methoxy silane, vinyl dimethyl ethoxy silane, vinylmethyl dichloro silane, vinylphenyl dichloro silane, vinylphenyl diethoxy silane, vinylphenyl dimethyl silane, vinylphenyl methyl chloro silane, triphenoxy vinyl silane, tris-t-butoxy silane, adamantylethyl trichloro silane, allyl phenyl trichloro silane, (aminoethyl aminomethyl) phenethyl trimethoxy silane, 3-aminophenoxy dimethyl vinyl silane, phenyl trichloro silane, phenyl dimethyl chloro silane, phenylmethyl dichloro silane, benzyl trichloro silane, benzyl dimethyl chloro silane, benzyl methyl dichloro silane, phenethyl diisopropyl chloro silane, phenethyl trichloro silane, phenethyl dimethyl chloro silane, phenethyl methyl dichloro silane, 5-(bicycloheptenyl) trichloro silane, 5-(bicycloheptenyl) triethoxy silane, 2-(bicycloheptyl) dimethyl chloro silane, 2-(bicycloheptyl) trichloro silane, 1,4-bis (trimethoxy silyl ethyl) benzene, bromophenyl trichloro silane, 3-phenoxypropyl dimethyl chloro silane, 3-phenoxypropyl trichloro silane, t-butyl phenyl chloro silane, t-butyl phenyl methoxy silane, t-butyl phenyl dichloro silane, p-(t-butyl) phenethyl dimethyl chloro silane, p-(t-butyl) phenethyl trichloro silane, 1,3-(chlorodimethyl silyl methyl) heptacosane, ((chloromethyl) phenyl ethyl) dimethyl chloro silane, ((chloromethyl) phenyl ethyl) methyl dichloro silane, ((chloromethyl) phenylethyl) trichloro silane, ((chloromethyl) phenylethyl) trimethoxy silane, chlorophenyl trichloro silane, 2-cyanoethyl trichloro silane, 2-cyanoethyl methyl dichloro silane, 3-cyanopropyl methyl diethoxy silane, 3-cyanopropyl methyl dichloro silane, 3-cyanopropyl methyl dichloro silane, 3-cyanopropyl dimethylethoxy silane, 3-cyanopropyl methyl dichloro silane, 3-cyanopropyl trichloro silane, fluorinated alkyl silane, and the like, and it is possible to use one type or a combination of two or more types which are selected from these.

Among these, it is preferable that hexamethyl disilazane is used in the hydrophobic processing. Due to this, it is possible for the particles to have higher hydrophobicity. In addition, it is possible for uniformity of the extent of the hydrophobic processing to be higher for each of the particles and each portion on the surface of the particles (including the surfaces inside of the porous holes) in an easy and reliable manner.

In a case where the hydrophobic processing is performed using a silane compound in a liquid phase, it is possible for a desired reaction to appropriately progress and it is possible to form a silane compound chemical absorption film by immersing the particles, where the hydrophobic processing is to be carried out, in a liquid which includes a silane compound.

In addition, in a case where the hydrophobic processing is performed using a silane compound in a gas phase, it is possible for a desired reaction to appropriately progress and it is possible to form a silane compound chemical absorption film by exposing the particles, where the hydrophobic processing is to be carried out, to the vapors of a silane compound.

The average particle diameter of the particles which configure the three dimensional molding powder is not particularly limited but is preferably 1 µm or more and 25 µm or less and is more preferably 1 µm or more and 15 µm or less. Due to this, it is possible for the three dimensional mold object to have particularly superior mechanical strength, for unintentional irregularities and the like to be more effectively prevented from being generated in the three dimensional mold object which is manufactured, and for the three dimensional mold object to have particularly superior dimensional precision. In addition, it is possible for fluidity of the three dimensional molding powder and fluidity of the three dimensional molding composition which includes the three dimensional molding powder to be particularly superior and it is possible for the three dimensional mold object to have particularly superior productivity. Here, the average particle diameter in the present invention refers to the average particle diameter on a volume basis and it is possible to determine by, for example, adding methanol to a sample and measuring a dispersion liquid, which is dispersed for three minutes using an ultrasonic dispersing unit, with a Coulter counter type of particle size distribution measuring unit (type TA-II manufactured by Coulter Electronics Inc.) with an aperture of 50 µm.

The maximum diameter of the particles which configure the three dimensional molding powder is preferably 3 µm or more and 40 µm or less and is more preferably 5 µm or more and 30 µm or less. Due to this, it is possible for the three dimensional mold object to have particularly superior mechanical strength, for unintentional irregularities and the like to be more effectively prevented from being generated in the three dimensional mold object which is manufactured, and for the three dimensional mold object to have particularly superior dimensional precision. In addition, it is possible for fluidity of the three dimensional molding powder and fluidity of the three dimensional molding composition which includes the three dimensional molding powder to be particularly superior and it is possible for the three dimensional mold object to have particularly superior productivity. In addition, it is possible to more effectively prevent scattering of light due to the particles on the surface of the three dimensional mold object which is manufactured.

In a case where the particles are porous particles, the porosity of the porous particles which configure the three dimensional molding powder is preferably 50% or more and is more preferably 55% or more and 90% or less. Due to this, it is possible for there to be sufficient spaces (the porous holes) into which the bonding agent enters and for the porous particles to have particularly superior mechanical strength, and as a result, it is possible for the three dimensional mold object to have particularly superior productivity due to the bonding resin penetrating into the porous holes. Here, the porosity of the particles in the present invention refers to the proportion of the holes which are inside of the particles (in terms of volume) with regard to the apparent volume of the particles and is a value which is represented by {(ρ₀-ρ)/ρ₀}×100 when the density of the particles is ρ (g/cm³) and the true density of the configuring material of the particles is ρ₀ (g/cm³).

In a case where the particles are porous particles, the average hole diameter of the porous particles (the diameter of the pores) is preferable 10 nm or more and is more preferably 50 nm or more and 300 nm or less. Due to this, it is possible for the three dimensional mold object which is obtained as a final product to have particularly superior mechanical strength. In addition, in a case where the color bonding liquid which includes a pigment is used in manufacturing the three dimensional mold object, it is possible for the pigment to be appropriately held in the porous holes of the porous particles. For this reason, it is possible to prevent unintentional dispersing of the pigment and it is possible to more reliably form high precision images.

The particles which configure the three dimensional molding powder may have any shape but preferably have spherical shapes. Due to this, it is possible for fluidity of the three dimensional molding powder and fluidity of the three dimensional molding composition which includes the three dimensional molding powder to be particularly superior and it is possible for the three dimensional mold object to have particularly superior productivity, and it is possible for unintentional irregularities and the like to be more effectively prevented from being generated in the three dimensional mold object which is manufactured and for the three dimensional mold object to have particularly superior dimensional precision.

The three dimensional molding powder may include a plurality of types of particles where the conditions (for example, the configuring materials of the particles, the type of hydrophobic processing, and the like) are different to each other as described above.

The void ratio of the three dimensional molding powder is preferably 70% or more and 98% or less and is more preferably 75% or more and 97.7% or less. Due to this, it is possible for the three dimensional mold object to have particularly superior mechanical strength. In addition, it is possible for fluidity of the three dimensional molding powder and fluidity of the three dimensional molding composition which includes the three dimensional molding powder to be particularly superior and it is possible for the three dimensional mold object to have particularly superior productivity, and it is possible to more effectively prevent unintentional irregularities and the like being generated in the three dimensional mold object which is manufactured and for the three dimensional mold object to have particularly superior dimensional precision. Here, in a case where the inside of a vessel with a designated capacity (for example, 100 mL) is filled with the three dimensional molding powder, the void ratio of the three dimensional molding powder in the present invention refers to the ratio of the sum of the volume of the porous holes in all of the particles which configure the three dimensional molding powder and the volume of the voids which are between the particles with regard to the capacity of the vessel and is a value which is represented by {(P₀-P)/P₀}×100 when the bulk density of the three dimensional molding powder is P (g/cm³) and the true density of the configuring materials of the three dimensional molding powder is Po (g/cm³).

The content ratio of the three dimensional molding powder in the three dimensional molding composition is preferably 10% or more by mass and 90% or less by mass and is more preferably 15% or more by mass and 58% or less by mass. Due to this, it is possible for the fluidity of the three dimensional molding composition to be sufficiently superior and it is possible for the three dimensional mold object which is obtained as a final product to have particularly superior mechanical strength.

### Water Soluble Resin

The three dimensional molding composition may include a water soluble resin along with a plurality of the particles. Due to the water soluble resin being included, the particles are bonded (temporary fixed) together and it is possible to effectively prevent unintentional scattering and the like of the particles. Due to this, it is possible to achieve an improvement in the safety of an operator and dimensional precision of the three dimensional mold object which is manufactured.

In the present specifications, it is sufficient if at least a portion of the water soluble resin is soluble in water and the solubility with regard to water at 25°C (the amount which is able to be dissolved in 100 g of water) is preferably, for example, 5 (g/100g of water) or more and is more preferably 10 (g/100g of water) or more.

As the water soluble resin, there are the examples of, for example, synthetic polymers such as polyvinyl alcohol (PVA), polyvinyl pyrrolidone (PVP), sodium polyacrylate, polyacrylamide, modified polyamide, and polyethylene imine, polyethylene oxide, natural polymers such as corn starch, mannan, pectin, agar, alginic acid, dextran, glue, and gelatin, semisynthetic polymers such as carboxymethyl cellulose, hydroxyethyl cellulose, oxidized starch, and modified starches, and the like, and it is possible to use one type or a combination of two or more types which are selected from these.

As examples of water soluble resin products, there are the examples of, for example, methyl cellulose (product name "METOLOSE SM-15" manufactured by Shin-Etsu Chemical Co., Ltd.), hydroxyethyl cellulose (product name "AL-15" manufactured by Fuji Chemical Co., Ltd.), hydroxypropyl cellulose (product name "HPC-M" manufactured by Nippon Soda Co., Ltd.), carboxymethyl cellulose (product name "CMC-30" manufactured by Nichirin Chemical Co., Ltd.), starch phosphate ester sodium (I) (product name "HOSTER 5100" manufactured by Matsutani Chemical Industry Co., Ltd.), polyvinylpyrrolidone (product name "PVP K-90" manufactured by Tokyo Chemical Co., Ltd.), methyl vinyl ether / maleic anhydride copolymer (product name "AN-139" manufactured by GAF Chemical Corp.), polyacrylamide (manufactured by Wako Pure Chemical Industries Ltd.), modified polyamide (modified nylon) (product name "AQ nylon" manufactured by Toray Industries Inc.), polyethylene oxide (product name "PEO-1" manufactured by Seitetsu Kagaku Kogyo K.K.), random copolymer of ethylene oxide and propylene oxide (product name "ALKOX EP" manufactured by Meisei Chemical Works, Ltd.), sodium polyacrylate (manufactured by Wako Pure Chemical Industries Ltd.), carboxy vinyl polymer / cross-linked water soluble acrylic resin (product name "AQUPEC" manufactured by Sumitomo Seika Chemicals Co., Ltd.), and the like.

Among these, it is possible for the three dimensional mold object to have particularly superior mechanical strength in a case where the water soluble resin is a polyvinyl alcohol. In addition, it is possible to more appropriately control the properties of the water soluble resin (for example, solubility in water, water resistance, and the like) and the properties of the three dimensional molding composition (for example, viscosity, force for fixing of the particles, wettability, and the like) by adjusting the extent of saponification and polymerization. For this reason, it is possible to more appropriately correspond to manufacturing of various types of the three dimensional mold object. In addition, polyvinyl alcohols are cheaper and have a more stable supply among the various types of water soluble resins. For this reason, it is possible to perform stable manufacturing of the three dimensional mold object while suppressing production costs.

In a case where the water soluble resin includes polyvinyl alcohol, it is preferable that saponification of the polyvinyl alcohol be 85 or more and 90 or less. Due to this, it is possible to suppress a reduction in solubility of the polyvinyl alcohol with regard to water. For this reason, it is possible to more effectively suppress a reduction in adhesiveness between the unit layers 2 which are adjacent in a case where the three dimensional molding composition includes water.

In a case where the water soluble resin includes polyvinyl alcohol, it is preferable that polymerization of the polyvinyl alcohol be 300 or more and 1000 or less. Due to this, it is possible to have particularly superior mechanical strength in each of the unit layers 2 and adhesiveness between the unit layers 2 which are adjacent in a case where the three dimensional molding composition includes water.

In addition, the following effects are obtained in a case where the water soluble resin is a polyvinyl pyrrolidone (PVP). That is, since polyvinyl pyrrolidone has superior adhesiveness with regard to various materials such as glass, metals, and plastics, it is possible for the layer 1 where the bonding liquid is not applied to have particularly superior stability in the strength and shape of portions and for the three dimensional mold object which is obtained as a final product to have particularly superior dimensional precision. In addition, since polyvinyl pyrrolidone exhibits high solubility with regard to various types of organic solvents, it is possible for the three dimensional molding composition to have particularly superior fluidity in a case where the three dimensional molding composition includes an organic solvent, it is possible to appropriately form the layer 1 where unintentional variation in the thickness is more effectively prevented, and it is possible for the three dimensional mold object which is obtained as a final product to have particularly superior dimensional precision. In addition, since polyvinyl pyrrolidone exhibits high solubility with regard to water, it is possible to easily and reliably remove the particles which are not bonded using the bonding agent out of the particles which configure each of the layers 1 in an unbonded particles removing process (after manufacturing is complete). In addition, since polyvinyl pyrrolidone has appropriate affinity with the three dimensional molding powder, wettability with regard to the surface of the particles is comparatively high while, on the other hand, it is sufficiently difficult for entering into the porous holes to occur as described above. For this reason, it is possible to more effectively exhibit the function of temporary fixing as described above. In addition, since polyvinyl pyrrolidone has superior affinity with regard to various types of coloring agents, it is possible to effectively prevent unintentional spreading of the coloring agent in a case where the bonding liquid which includes a coloring agent is used in a bonding liquid applying process. In addition, since polyvinyl pyrrolidone has an anti-static function, it is possible to effectively prevent scattering of the particles in a case where the particles which are not in a paste are used as the three dimensional molding composition in the layer forming process. In addition, if the three dimensional molding composition in a paste form includes polyvinyl pyrrolidone in a case where the three dimensional molding composition is used as a paste in the layer forming process, it is possible to effectively prevent foam from being mixed into the three dimensional molding composition and it is possible to more effectively prevent defects due to the foam being mixed in being generated in the layer forming process.

In a case where the water soluble resin includes polyvinyl pyrrolidone, the weight average molecular weight of the polyvinyl pyrrolidone is preferably 10000 or more and 1700000 or less and is preferably 30000 or more and 1500000 or less. Due to this, it is possible to more effectively exhibit the function described above.

It is preferable that the water soluble resin in the three dimensional molding composition be in a liquid state (for example, in a dissolved state, a melted state, or the like) at least in the layer forming process. Due to this, it is possible for the uniformity of the thickness of the layers 1 which are formed using the three dimensional molding composition to be increased in an easy and reliable manner.

The content ratio of the water soluble resin in the three dimensional molding composition is preferably 15% or less by volume and is more preferably 2% or more by volume and 5% or less by volume with regard to the true volume of the three dimensional molding powder. Due to this, it is possible for the functions of the water soluble resin as described above to be sufficiently exhibited and for a wider space for the bonding liquid to penetrate to be secured and it is possible for the three dimensional mold object to have particularly superior mechanical strength.

### Solvent

The three dimensional molding composition may include a volatile solvent in addition to the water soluble resin and the three dimensional molding powder described above. Due to this, it is possible to particularly superior fluidity of the three dimensional molding composition and for the three dimensional mold object to have particularly superior productivity.

It is preferable that the water soluble resin be dissolved in the solvent. Due to this, it is possible for the three dimensional molding composition to have favorable fluidity and it is possible more effectively to prevent unintentional variation in the thickness of the layers 1 which are formed using the three dimensional molding composition. In addition, it is possible for the water soluble resin to be attached to the particles with higher uniformity over the entirety of the layer 1 when the layer 1 is formed in a state where the solvent is removed and it is possible to more effectively prevent unintentional unevenness in the composition being generated. For this reason, it is possible to more effectively prevent unintentional variation in mechanical strength being generated at each portion of the three dimensional mold object which is obtained as a result and it is possible for the three dimensional mold object to have higher reliability.

As the solvent which configures the three dimensional molding composition, there are the examples of, for example, water, alcoholic solvents such as methanol, ethanol, and isopropanol, ketone solvents such as methyl ethyl ketone and acetone, glycol ether solvents such as ethylene glycol monoethyl ether and ethylene glycol monobutyl ether, glycol ether acetate solvents such as propylene glycol 1-monomethyl ether 2-acetate and propylene glycol 1-monomethyl ether 2-acetate, polyethylene glycol, polypropylene glycol, and the like, and it is possible to use one type or a combination of two or more types which are selected from these.

Among these, it is preferable that the three dimensional molding composition includes water. Due to this, it is possible for the water soluble resin to be more reliably dissolved and it is possible to have particularly superior fluidity of the three dimensional molding composition and uniformity of the composition in the layers 1 which are formed using the three dimensional molding composition. In addition, removing of water after forming the layer 1 is easy and it is difficult for there to be adverse effects even in a case where water remains in the three dimensional mold object. In addition, it is effective from the points of view of safety for people, environmental issues, and the like.

The content ratio of the solvent in the three dimensional molding composition in a case where the three dimensional molding composition includes the solvent is preferably 5% or more by mass and 75% or less by mass and more preferably 35% or more by mass and 70% or less by mass. Due to this, since the effects from including the solvent as described above are more remarkably exhibited and it is possible for the solvent to be easily removed in a short period of time in the process of manufacturing the three dimensional mold object, it is effective from the point of view of improving productivity of the three dimensional mold object.

In particular, the content ratio of water in the three dimensional molding composition in a case where the three dimensional molding composition includes water as the solvent is preferably 20% or more by mass and 73% or less by mass and more preferably 50% or more by mass and 70% or less by mass. Due to this, the effects as described above are more remarkably exhibited.

### Other Compounds

In addition, the three dimensional molding composition may include compounds other than the compounds described above. As the other compounds, there are the examples of, for example, a polymerization initiator, a polymerization accelerator, a penetration enhancing agent, a wetting agent (a moisturizing agent), a fixing agent, an antimold agent, a preserving agent, an antioxidizing agent, an ultraviolet absorbing agent, a chelating agent, a pH adjusting agent, and the like.

### 5. Bonding Liquid

The bonding liquid will be described in detail next.

### Bonding Agent

The bonding liquid includes at least the bonding agent.

The bonding agent is a component which provides a function of bonding the particles due to being cured.

The bonding agent is not particularly limited but it is preferable to use a bonding agent which is hydrophobic (lipophilic). Due to this, it is possible for higher affinity between the bonding liquid and the particles and it is possible for the bonding liquid to appropriately penetrate into the porous holes in the particles due to the bonding liquid being applied to the layers 1 in a case where, for example, particles where a hydrophobic processing is carried out are used. As a result, the anchor effect is appropriately exhibited using the bonding agent and it is possible for the three dimensional mold object which is obtained as a final product to have superior mechanical strength. Here, it is sufficient if the hydrophobic curable resin in the present invention has sufficiently low affinity with regard to water and it is preferable that the solubility with regard to water at 25°C be, for example, 1 (g/100g of water) or less.

As the bonding agent, there are the examples of, for example, thermoplastic resins, thermosetting resins, various types of photocurable resins such as visible light curable resins which are cured using the spectrum of visible light (photocurable resins in a narrow sense), ultraviolet ray curable resins, and infrared curable resins, X-ray curable resins, and the like, and it is possible to use one type or a combination of two or more types which are selected from these. Among these, it is preferable that the bonding agent be a curable resin from the point of view of mechanical strength of the three dimensional mold object which is obtained, productivity of the three dimensional mold object, and the like. In addition, among the various types of curable resins, ultraviolet ray curable resins (polymerizable compounds) are particularly preferable from the point of view of mechanical strength of the three dimensional mold object which is obtained, productivity of the three dimensional mold object, safe storage of the bonding agent, and the like.

As the ultraviolet ray curable resins (polymerizable compounds), it is preferable to use a resin where addition polymerization or ring-opening polymerization is started and a polymer is generated due to a radial type, a cation type, or the like which is generated from a photopolymerization initiator due irradiating of ultraviolet rays. As the addition polymerization format, there are the examples of radial, cation, anion, metathesis, and coordination polymerization. In addition, as the ring-opening polymerization format, there are the examples of cation, anion, radial, metathesis, and coordination polymerization.

As the addition polymerizable compound, there are the examples of, for example, a compound which has at least one ethyleny unsaturated double bond and the like. As the addition polymerizable compound, it is possible to preferably use a compound with at least one or more preferable two or more terminal ethyleny unsaturated bonds.

The polymerizable compound with the ethyleny unsaturated bond has a chemical form of a monofunctional polymerizable compound, a polyfunctional polymerizable compound, or a mixture of these. As the monofunctional polymerizable compound, there are the examples of, for example, unsaturated carboxylic acids (for example, acrylic acids, methacrylic acids, itaconic acids, crotonic acids, isocrotonic acids, maleic acids, and the like) and esters, amides, and the like of the unsaturated carboxylic acids. As the polyfunctional polymerizable compound, an ester of an unsaturated carboxylic acid and an aliphatic polyalcohol compound, an amide of an unsaturated carboxylic acid and an aliphatic polyamine compound, and the like are used.

In addition, it is possible to also use an addition reactant with an ester, amide, isocyanate, or epoxy of unsaturated carboxylic acid which has a nucleophilic substituent such as a hydroxyl group, an amino group, or a mercapto group or a dehydration condensation reactant with the carboxylic acid. In addition, it is possible to also use an addition reactant with an ester, amide, alcohol, amine, or thiol of unsaturated carboxylic acid which has an electrophilic substituent such as an isocyanate group or an epoxy group and a substitution reactant with an ester, amide, alcohol, amine, or thiol of unsaturated carboxylic acid which has a detaching substituent group such as a halogen group or a tosyloxy group.

As specific examples of a radical polymerizable compound which is an ester of an unsaturated carboxylic acid and an aliphatic polyalcohol compound, for example, (meth)acrylate ester is representative and it is possible to use monofunctional and polyfunctional (meth)acrylate esters.

As specific examples of monofunctional (meth)acrylate, there are the examples of, for example, tolyloxy methyl ethyl (meth)acrylate, phenyloxy ethyl (meth)acrylate, cyclohexyl (meth)acrylate, ethyl (meth)acrylate, methyl (meth)acrylate, isobornyl (meth)acrylate, tetrahydro furfuryl (meth)acrylate, and the like.

As specific examples of bifunctional (meth)acrylate, there are the examples of, for example, ethylene glycol di(meth)acrylate, triethylene glycol di(meth)acrylate, 1,3-butanediol di(meth)acrylate, tetramethylene glycol di(meth)acrylate, propylene glycol di(meth)acrylate, neopentyl glycol di(meth)acrylate, hexanediol di(meth)acrylate, 1,4-cyclohexane diol di(meth)acrylate, tetraethylene glycol di(meth)acrylate, pentaerythritol di(meth)acrylate, dipentaerythritol di(meth)acrylate, and the like.

As specific examples of trifunctional (meth)acrylate, there are the examples of, for example, trimethylolpropane tri(meth)acrylate, trimethylolpropane tri(meth)acrylate, trimethylolpropane alkylene oxide-modified tri(meth)acrylate, pentaerythritol tri(meth)acrylate, dipentaerythritol tri(meth)acrylate, trimethylolpropane tri((meth)acryloyloxy propyl) ether, isocyanurate alkylene oxide-modified tri(meth)acrylate, propionate dipentaerythritol tri(meth)acrylate, tri((meth)acryloyloxyethyl) isocyanurate, hydroxypivalaldehyde-modified dimethylol propane tri(meth)acrylate, sorbitol tri(meth)acrylate, and the like.

As specific examples of tetrafunctional (meth)acrylate, there are the examples of, for example, pentaerythritol tetra(meth)acrylate, sorbitol tetra(meth)acrylate, ditrimethylolpropane tetra(meth)acrylate, propionate dipentaerythritol tetra(meth)acrylate, ethoxylated pentaerythritol tetra(meth)acrylate, and the like.

As specific examples of pentafunctional (meth)acrylate, there are the examples of, for example, sorbitol penta(meth)acrylate, dipentaerythritol penta(meth)acrylate, and the like.

As specific examples of hexafunctional (meth)acrylate, there are the examples of, for example, dipentaerythritol hexa(meth)acrylate, sorbitol hexa(meth)acrylate, phosphazene alkylene oxide-modified hexa(meth)acrylate, caprolactone-modified dipentaerythritol hexa(meth)acrylate, and the like.

As polymerizable compounds other than (meth)acrylate, there are the examples of, for example, itaconic acid esters, crotonic acid esters, isocrotonic acid esters, maleic acid esters, and the like.

As the itaconic acid esters, there are the examples of, for example, ethylene glycol diitaconate, propylene glycol diitaconate, 1,3-butanediol diitaconate, 1,4-butanediol diitaconate, tetramethylene glycol diitaconate, pentaerythritol diitaconate, sorbitol tetraitaconate, and the like.

As the crotonic acid esters, there are the examples of, for example, ethylene glycol dicrotonate, tetramethylene glycol dicrotonate, pentaerythritol dicrotonate, sorbitol tetra dicrotonate, and the like.

As the isocrotonic acid esters, there are the examples of, for example, ethylene glycol isocrotonate, pentaerythritol isocrotonate, sorbitol tetraisocrotonate, and the like.

As the maleic acid esters, there are the examples of, for example, ethylene glycol dimaleate, triethylene glycol dimaleate, pentaerythritol dimaleate, sorbitol tetra malate, and the like.

As examples of other esters, it is possible to, for example, use aliphatic alcohol esters described in Japanese Examined Patent Application Publication No. S46-27926, Japanese Examined Patent Application Publication No. S51-47334, and Japanese Unexamined Patent Application Publication No. S57-196231, esters with an aromatic skeleton described in Japanese Unexamined Patent Application Publication No. S59-5240, Japanese Unexamined Patent Application Publication No. S59-5241, and Japanese Unexamined Patent Application Publication No. H2-226149, esters with an amino group described in Japanese Unexamined Patent Application Publication No.H1-165613, and the like.

In addition, as specific examples of a monomer of an amide of an unsaturated carboxylic acid and an aliphatic polyalcohol compound, there are the examples of, for example, methylenebis-acrylamide, methylenebis-methacrylamide, 1,6-hexamethylene bis-acrylamide, 1,6-hexamethylene bis-methacrylamide, diethylenetriamine tris acrylamide, xylylene bisacrylamide, xylylene bismethacrylamide, and the like.

As other preferable amide monomers, there are the examples of, for example, amide monomers with a cyclohexylene structure described in Japanese Examined Patent Application Publication No. S54-21726 and the like.

In addition, a urethane additional polymerization compound which is manufactured using an additional reaction between isocyanate and a hydroxyl group is also appropriate, and as specific examples of this, there are the examples of, for example, vinyl urethane compounds which includes two or more polymerizable vinyl groups in one molecule where a vinyl monomer, which contains a hydroxyl group shown as formula (1) below, is added to a polyisocyanate compound which has two or more isocyanate groups in one molecule which is described in Japanese Examined Patent Application Publication No. S48-41708 and the like.

CH₂ = C(R¹)COOCH₂CH(R²)OH (1)

(Here, R¹ and R² in formula (1) each individually represent H or CH3.)

In the present invention, it is possible to appropriately use a cation ring-opening polymerizable compound, which has one or more cyclic ether groups such as an epoxy group or an oxetane group in a molecule, as the ultraviolet ray curable resin (the polymerizable compound).

As the cation polymerization compound, there are the examples of, for example, curable compounds which include a ring-opening polymerizable group and the like, and among these, a curable compound which includes a hetero ring group is particularly preferable. As this curable compound, there are the examples of, for example, epoxy derivatives, oxetane derivatives, tetrahydrofuran derivatives, cyclic lactone derivatives, cyclic carbonate derivatives, cyclic imino ethers such as oxazoline derivatives, vinyl ethers, and the like, and among these, epoxy derivatives, oxetane derivatives, and vinyl ethers are preferable.

As examples of preferable epoxy derivatives, there are the examples of, for example, monofunctional glycidyl ethers, multifunctional glycidyl ethers, monofunctional cycloaliphatic epoxies, polyfunctional cycloaliphatic epoxies, and the like.

Specific examples of specific glycidyl ether compounds include the examples of diglycidyl ethers (for example, ethylene glycol diglycidyl ethers, bisphenol A diglycidyl ethers, and the like), glycidyl ethers with three or more functional groups (for example, trimethylol ethane triglycidyl ethers, trimethylol propane triglycidyl ethers, glycerol triglycidyl ether, triglycidyl tris-hydroxyethyl isocyanurate, and the like), glycidyl ethers with four or more functional groups (for example, sorbitol tetra glycidyl ethers, pentaerythritol tetraglycyl ethers, polyglycidyl ethers of cresol novolac resins, polyglycidyl ethers of phenol novolac resins, and the like), alicyclic epoxy (for example, CELLOXIDE 2021P, CELLOXIDE 2081, EPOLEAD GT-301, and EPOLEAD GT-401 (all manufactured by Daicel Corp.), EHPE (manufactured by Daicel Corp.), polycyclohexyl epoxy methyl ether of phenol novolac resin, oxetanes (for example, OX-SQ and PNOX-1009 (all manufactured by Toagosei Co., Ltd.), and the like.

It is possible to preferably use alicyclic epoxy derivatives as the polymerizable compound. An "alicyclic epoxy group" refers to partial structures where a double bond of a cycloalkane ring such as a cyclopentene group or a cyclohexene group is epoxied using an appropriate oxidizing agent such as hydrogen peroxide or peracid.

As the alicyclic epoxy derivative, polyfunctional cycloaliphatic epoxies, which have two or more of a cyclohexene oxide group or a cyclopentene oxide group in one molecule, are preferable. As specific examples of alicyclic epoxy compounds, there are the examples of, for example, 4-vinyl cyclohexene dioxide, (3,4-epoxy cyclohexyl) methyl 3,4-epoxy cyclohexyl carboxylate, di(3,4-epoxy cyclohexyl) adipate, di(3,4-epoxy cyclohexyl methyl) adipate, bis (2,3-epoxycyclopentyl) ether, di(2,3-epoxy-6-methylcyclo hexylmethyl) adipate, dicyclopentadiene dioxide, and the like.

It is possible to use a glycidyl compound, which has a typical epoxy group which does not have an alicyclic structure in the molecule, individually or together with the alicyclic epoxy derivative described above.

As a typical glycidyl compound, it is possible for there to be the examples of, for example, a glycidyl ether compound, a glycidyl ester compound, and the like, but use together with a glycidyl ether compound is preferable.

As specific examples of the glycidyl ether compound, there are the examples of, for example, aromatic glycidyl ether compounds such as 1,3-bis (2,3-epoxypropyloxy) benzene, a bisphenol A type epoxy resin, a bisphenol F-type epoxy resin, a phenol novolac epoxy resin, a cresol novolac epoxy resin, and a trisphenolmethane epoxy resin, aliphatic glycidyl ether compounds such as 1,4-butanediol glycidyl ether, glycerol triglycidyl ether, propylene glycol diglycidyl ether, and trimethylolpropane triglycidyl ether, and the like. As the glycidyl ether, it is possible for there to be the examples of, for example, a linoleate dimer glycidyl ether and the like.

As the polymerizable compound, it is possible to use a compound which has an oxetanyl group which is a cyclic ether with a four-membered ring (referred to below simply as "oxetanyl group"). The compound which includes an oxetanyl group is a compound with one or more oxetanyl groups in one molecule.

The content ratio of the bonding agent in the bonding liquid is preferable 80% or more by mass and is more preferably 85% or more by mass. Due to this, it is possible for the three dimensional mold object which is obtained as a final product to have particularly superior mechanical strength.

### Other Compounds

In addition, the bonding liquid may include compounds other than the compounds described above. As the other compounds, there are the examples of, for example, various types of coloring agents such as pigments and dyes, a dispersing agent, a surfactant, a polymerization initiator, a polymerization accelerator, a solvent, a penetration enhancing agent, a wetting agent (a moisturizing agent), a fixing agent, an antimold agent, a preserving agent, an antioxidizing agent, an ultraviolet absorbing agent, a chelating agent, a pH adjusting agent, a thickening agent, a filler, an aggregation inhibitor, a defoamer, and the like.

In particular, due to the bonding liquid including a coloring agent, it is possible to obtain the three dimensional mold object which is colored with a color which corresponds to the color of the coloring agent.

In particular, due to a pigment being included as the color agent, it is possible for light proofing of the bonding liquid and the three dimensional mold object to be favorable. It is possible for any inorganic pigment or organic pigment to be used as the pigment.

As the inorganic pigment, there are the examples of, for example, types of carbon black (C.I. Pigment Black 7) such as furnace black, lamp black, acetylene black, and channel black, iron oxide, titanium oxide, and the like, and it is possible to use one type or a combination of two or more types which are selected from these.

Among the inorganic pigments, titanium oxide is preferable for a preferable white color.

As the organic pigment, there are the examples of, for example, azo pigments such as an insoluble azo pigment, a condensed azo pigment, an azo lake pigment, and a chelate azo pigment, polycyclic pigments such as a phthalocyanine pigment, a perylene pigment, a perynone pigment, an anthraquinone pigment, a quinacridone pigment, a dioxane pigment, a thioindigo pigment, and a quinophthalone pigment, dye chelates (for example, basic dye chelates, acidic dye chelates, and the like), color lakes (basic dye lakes and acidic dye lakes), nitro pigments, nitroso pigments, aniline black, daylight fluorescent pigments, and the like, and it is possible to use one type or a combination of two or more types which are selected from these.

In further detail, as carbon black which is used as a black pigment, there are the examples of, for example, No. 2300, No. 900, MCF88, No. 33, No. 40, No. 45, No. 52, MA7, MA8, MA100, No. 2200B, and the like (all manufactured by Mitsubishi Chemical Corp.), Raven 5750, Raven 5250, Raven 5000, Raven 3500, Raven 1255, Raven 700, and the like (all manufactured by Carbon Columbia Inc.), Regal 400R, Regal 330R, Regal 660R, Mogul L, Monarch 700, Monarch 800, Monarch 880, Monarch 900, Monarch 1000, Monarch 1100, Monarch 1300, Monarch 1400, and the like (all manufactured by Cabot Japan K.K.), Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, Special Black 4, and the like (all manufactured by Degussa AG), and the like.

As white pigments, there are the examples of, for example, C.I. pigment white 6, 18, 21, and the like.

As yellow pigments, there are the examples of, for example, C.I. pigment yellow 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 167, 172, 180, and the like.

As magenta pigments, there are the examples of, for example, C.I. pigment red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48 (Ca), 48 (Mn), 57 (Ca), 57:1, 88, 112, 114, 122, 123, 144, 146, 149, 150, 166, 168, 170, 171, 175, 176, 177, 178, 179, 184, 185, 187, 202, 209, 219, 224, 245, and C.I. pigment violet 19, 23, 32, 33, 36, 38, 43, 50, and the like.

As cyan pigments, there are the examples of, for example, C.I. pigment blue 1, 2, 3, 15, 15:1, 15:2, 15:3, 15:34, 15:4, 16, 18, 22, 25, 60, 65, 66, and C.I. vat blue 4, 60, and the like.

In addition, as pigments other than the pigments described above, there are the examples of, for example, C.I. pigment green 7, 10, C.I. pigment brown 3, 5, 25, 26, C.I. pigment orange 1, 2, 5, 7, 13, 14, 15, 16, 24, 34, 36, 38, 40, 43, 63, and the like.

In a case where the bonding liquid includes a pigment, the average particular diameter of the pigment is preferably 300 nm or less and is more preferably 50 nm or more and 250 nm or less. Due to this, it is possible to have particularly superior discharge stability of the bonding liquid and pigment dispersing stability within the bonding liquid, and it is possible to form images with more superior image quality.

In a case where the bonding liquid includes a pigment and the particles are porous, it is preferable that, when the average diameter of the porous holes in the particles is d1 (nm) and the average particle diameter of the pigment is d2 (nm), a relationship of d1/d2 > 1 be satisfied and it is more preferable that a relationship of 1.1 ≤ d1/d2 ≤ 6 be satisfied. Due to these relationships being satisfied, it is possible for the pigment to be appropriately held in the porous holes of the particles. For this reason, it is possible to prevent unintentional scattering of the pigment and it is possible to more reliably form highly precise images.

In addition, as dyes, there are the examples of, for example, acid dyes, direct dyes, reactive dyes, basic dyes, and the like, and it is possible to use one type or a combination of two or more types which are selected from these.

As specific examples of dyes, there are the examples of, for example, C.I. acid yellow 17, 23, 42, 44, 79, 142, C.I. acid red 52, 80, 82, 249, 254, 289, C.I. acid blue 9, 45, 249, C.I. acid black 1, 2, 24, 94, C.I. food black 1, 2, C.I. direct yellow 1, 12, 24, 33, 50, 55, 58, 86, 132, 142, 144, 173, C.I. direct red 1, 4, 9, 80, 81, 225, 227, C.I. direct blue 1, 2, 15, 71, 86, 87, 98, 165, 199, 202, C.I. direct black 19, 38, 51, 71, 154, 168, 171, 195, C.I. reactive red 14, 32, 55, 79, 249, C.I. reactive black 3, 4, 35, and the like.

In a case where the bonding liquid includes a coloring agent, the content ratio of the coloring agent in the bonding liquid is preferably 1% or more by mass and 20% or less by mass. Due to this, particularly superior concealment and color reproduction are obtained.

In particular, in a case where the bonding liquid includes titanium oxide as the coloring agent, the content ratio of titanium oxide in the bonding liquid is preferably 12% or more by mass and 18% or less by mass and is more preferably 14% or more by mass and 16% or less by mass. Due to this, particularly superior concealment is obtained.

In a case where the bonding liquid includes a pigment, more favorable dispersing of the pigment is possible if a dispersing agent is also included. As a result, it is possible to more effectively suppress partial reductions in mechanical strength due to biases in the pigment.

The dispersing agent is not particularly limited and there are the examples of, for example, dispersing agents which are commonly used in preparing pigment dispersion liquids such as polymer dispersing agents. As specific examples of polymer dispersing agents, there are the examples of, for example, dispersing agents with a main component which is one or more type from polyoxyalkylene polyalkylene polyamines, vinyl polymers and copolymers, acrylic polymers and copolymers, polyesters, polyamides, polyimides, polyurethanes, amino polymers, silicon-containing polymers, sulfur-containing polymers, fluorine-containing polymers, and epoxy resins. As a commercially available product of a polymer dispersing agent, there are the examples of, for example, the AJISPER series from Ajinomoto Fine-Techno Co., Inc., the SOLSPERSE series (SOLSPERSE 36000 and the like) from Noveon Inc., the DISPERBYK series from BYK-Chemie GmbH, the DISPARLON series from Kusumoto Chemicals, Ltd., and the like.

It is possible for the three dimensional mold object to have more favorable abrasion resistance if the bonding liquid includes a surfactant. The surfactant is not particularly limited and it is possible to use, for example, polyester-modified silicone, polyether-modified silicone, and the like as silicone-based surfactants, and among these, polyether-modified polydimethyl siloxane and polyester modified polydimethyl siloxane are preferable. As specific examples of the surfactant, there are the examples of, for example, BYK-347, BYK-348, BYK-UV3500, 3510, 3530, 3570 (all product names manufactured by BYK-Chemie GmbH), and the like.

In addition, the bonding liquid may include a solvent. Due to this, it is possible for adjusting of the viscosity of the bonding liquid to be appropriately performed and it is possible for discharge stability of the bonding liquid using an ink jet system to be particularly superior even when the bonding liquid includes components with high viscosity.

As the solvent, there are the examples of, for example, (poly)alkylene glycol monoalkyl ethers such as ethylene glycol monomethyl ether, ethylene glycol monoethyl ether, propylene glycol monomethyl ether, and propylene glycol mono ethyl ether, acetic acid esters such as ethyl acetate, n-propyl acetate, iso-propyl acetate, n-butyl acetate, and iso-butyl acetate, aromatic hydrocarbons such as benzene, toluene, and xylene, ketones such as methyl ethyl ketone, acetone, methyl isobutyl ketone, ethyl-n-butyl ketone, diisopropyl ketone, and acetylacetone, alcohols such as ethanol, propanol, and butanol, and it is possible to use one type or a combination of two or more types which are selected from these.

In addition, the viscosity of the bonding liquid is preferably 10 mPa·s or more and 25 mPa·s or less and is more preferably 15 mPa·s or more and 20 mPa·s or less. Due to this, it is possible for the ink to have particularly superior discharge stability using an ink jet system. Here, viscosity in the present specifications is a value which is measured at 25°C using an E type viscometer (VISCONIC ELD manufactured by Tokyo Keiki Inc.).

In a case where a plurality of the bonding liquids are used, it is preferable that at least the bonding liquid which is cyan, the bonding liquid which is magenta, and the bonding liquid which is yellow be used. Due to this, it is possible for the color reproduction region which is able to be expressed to be wider by using combinations of these bonding liquids.

In addition, by using the bonding liquid which is white and the bonding liquid which is another color in combination, it is possible to obtain, for example, the following effects. That is, it is possible for the three dimensional mold object which is obtained as a final product to have a first region, where the bonding liquid which is white is applied, and a region where the bonding liquid with the color other than white which overlaps with the first region and is provided on the outer surface side of the first region. Due to this, it is possible for the first region, where the bonding liquid which is white is applied, to exhibit a concealment property and it is possible to increase the color intensity of the three dimensional mold object.

Furthermore, by using the bonding liquid which is white, the bonding liquid which is black, and the bonding liquid which is another color in combination, it is possible to obtain, for example, the following effects. That is, it is possible to further increase the color intensity of the three dimensional mold object and it is possible to widen the width over which brightness is expressed due to it being possible to express color tones with high levels of brightness which are lighter than colors, which are able to be expressed using the bonding liquid which is the other color, by using the bonding liquid which is white in combination and it being possible to express color tones with low levels of brightness which are lighter than colors, which are able to be expressed using the bonding liquid which is the other color, by using the bonding liquid which is black in combination.

Appropriate embodiments of the present invention are described above but the present invention is not limited to these.

For example, a configuration is described in the embodiments described above where the recovering section and the molding section are independent, but the configuration is not limited to this and the recovering section and the molding section may be integrally configured. In this case, there may be a configuration where the layers 1 are formed due to the molding section and the recovering section being moved without the squeegee being moved.

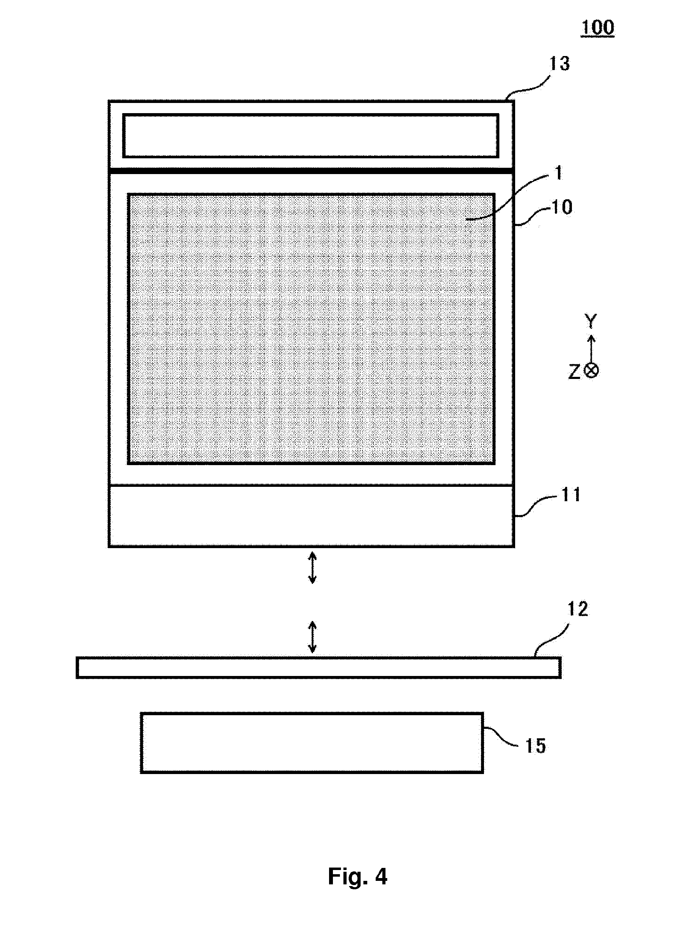

In addition, a configuration is described in the embodiments described above where the movement direction of the squeegee and the movement direction of the molding section intersect but the configuration is not limited to this. For example, there may be a configuration where the movement direction of the squeegee 12 and the movement direction of the molding section 10 are both in the Y axis direction as shown in Fig. 4. In the three dimensional mold object manufacturing apparatus 100 such as this, the molding section 10, the supplying section 11, the squeegee 12, the recovering section 13, and the discharging section 15 are configured to line up in the Y axis direction as shown in Fig. 4. In addition, there is a configuration where the molding section 10 and the supplying section 11 are integral and the supplying section 11 also moves along with the movement of the molding section 10.

In addition, in the manufacturing method of the present invention, a pre-processing process, an intermediate process, a post-processing process may be performed according to requirements.

As the pre-processing process, there are the examples of, for example, a process for cleaning the molding stage and the like.

As the post-processing process, there are the examples of, for example, a process for washing, a process for adjusting the shape where trimming or the like is performed, a process for coloring, a process for forming a covering layer, a process for completing curing of a curable resin where light radiation processing or heat processing is performed in order to reliably cure the curable resin which is uncured, and the like.

In addition, the embodiments described above are described centered around a case where the discharge process is performed using an ink jet system but the discharge process may be performed using another method (for example, another printing method).

In addition, the discharging section 15 is fixed when the bonding liquid is discharged in the embodiments described above, but the discharging section is not limited to being fixed and liquid droplets of the bonding liquid may be discharged due to movement of the discharging section 15 being performed in the Y direction by a designated amount such as half of the nozzle pitch while the molding section 10 is moved back and forth in the X direction.

In addition, the region of the nozzles in the liquid droplet discharge head, which are aligned in the Y direction which intersects with the movement direction of the molding section 10, may be provided so as to be able to cover a region of the layer 1 in the Y direction and liquid droplets of the bonding liquid may be discharged due to the discharging section 15 being fixed and the molding section 10 moving in the Y direction.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A three dimensional mold object manufacturing apparatus (100) configured to manufacture a three dimensional mold object (1) by layering layers (2) which are formed using a three dimensional molding composition which includes a three dimensional molding powder, the three dimensional mold object manufacturing apparatus comprising:
a molding section (10) configured to mold the three dimensional mold object;
a layer forming section (12) configured to form, on the molding section, the layers formed by the three dimensional molding composition; and
a discharging section (15) configured to discharge bonding liquid, for bonding the three dimensional molding composition, with regard to the layers,
the molding section (10) being configured so as to move to a drawing region of the discharging section (15).

2. The three dimensional mold object manufacturing apparatus according to claim 1, wherein
the layer forming section is configured such that a movement direction (Y) of the layer forming section and a movement direction (X) of the molding section intersect.

3. The three dimensional mold object manufacturing apparatus according to claim 1 or claim 2, further comprising:
a recovering section (13) configured to recover the three dimensional molding composition which is surplus when forming the layers.

4. The three dimensional mold object manufacturing apparatus according to claim 3, wherein
the recovering section is provided to be independent to the molding section.

5. The three dimensional mold object manufacturing apparatus according to any one of the preceding claims, wherein
the layer forming section is one type which is selected from a group which consists of a squeegee (12) and a roller.

6. A method for manufacturing a three dimensional mold object (1), where a three dimensional mold object is manufactured using the three dimensional mold object manufacturing apparatus (100) according to claim 1, the method comprising:
forming the layers using the layer forming section on the molding section; and
discharging the bonding liquid with regard to the layers.

7. A three dimensional mold object which is manufactured using the three dimensional mold object manufacturing apparatus according to any one of claims 1 to 5.

8. A three dimensional mold object which is manufactured using the method for manufacturing the three dimensional mold object according to claim 6.
